**Europäisches Patentamt**

**European Patent Office**

**Office européen des brevets**

(19)

(11) Veröffentlichungsnummer : **0 473 939 B1**

(12) # EUROPÄISCHE PATENTSCHRIFT

(45) Veröffentlichungstag der Patentschrift :
**17.05.95 Patentblatt 95/20**

(51) Int. Cl.⁶ : **G01M 1/06, G01M 1/22**

(21) Anmeldenummer : **91112800.7**

(22) Anmeldetag : **30.07.91**

(54) **Abbremsvorrichtung an einer Handauswuchtmaschine.**

(30) Priorität : **06.09.90 DE 4028335**

(43) Veröffentlichungstag der Anmeldung :
**11.03.92 Patentblatt 92/11**

(45) Bekanntmachung des Hinweises auf die
Patenterteilung :
**17.05.95 Patentblatt 95/20**

(84) Benannte Vertragsstaaten :
**ES FR GB IT**

(56) Entgegenhaltungen :
**DE-A- 3 314 287**
**DE-B- 2 243 002**
**GB-A- 2 153 095**

(73) Patentinhaber : **HOFMANN
WERKSTATT-TECHNIK GMBH
Werner-von-Siemens-Strasse 2
D-64319 Pfungstadt (DE)**

(72) Erfinder : **Schmidt, Horst
Ludwig-Clemenz-Strasse 3
W-6102 Pfungstadt (DE)**

(74) Vertreter : **Nöth, Heinz, Dipl.-Phys.
Patentanwalt,
Mozartstrasse 17
D-80336 München (DE)**

## Beschreibung

Die Erfindung betrifft eine Vorrichtung an einer Auswuchtmaschine, zum Abbremsen der Meßspindel, die mit Hilfe einer Handkurbel auf Meßdrehzahl bringbar ist, mit zwei Bremsscheiben, von denen die erste Bremsscheibe drehfest mit der Meßspindel verbunden ist, und die zweite Bremsscheibe beim Bremsvorgang in einer gegenüber dem Maschinenrahmen stillstehenden Position fixiert ist.

Es bereitet Schwierigkeiten, mit Hilfe von Eingriffsmitteln die zweite Bremsscheibe materialschonend in der stillstehenden Position am Maschinenrahmen zu fixieren.

Aufgabe der Erfindung ist es daher, eine materialschonende Fixierung der zweiten Bremsscheibe am Maschinenrahmen zur Einleitung des Abbremsvorgangs bei der eingangs genannten Vorrichtung zu erreichen.

Diese Aufgabe wird erfindungsgemäß dadurch gelöst, daß zum Fixieren der zweiten während des Unwuchtmeßvorgangs im ungebremsten Zustand mit der Meßspindel umlaufenden Bremsscheibe in der stillstehenden Position am Maschinenrahmen an der zweiten Bremsscheibe eine oder mehrere Eingriffstellen für einen am Maschinenrahmen senkrecht zur Drehrichtung der zweiten Bremsscheibe verschiebbar gelagerten Haltestift vorgesehen sind und daß nach Beendigung des Unwuchtmeßvorgangs der Haltestift in Abhängigkeit von der Drehwinkelposition und der Drehzahl der zweiten Bremsscheibe gesteuert mit einer Eingriffstelle an der zweiten Bremsscheibe durch eine Betätigungseinrichtung als Gegenlager für die Erzeugung eines Bremsmoments in Eingriff bringbar ist.

Für die Unwuchtmessung wird die Auswuchtmaschine mit Hilfe der Handkurbel auf Meßdrehzahl gebracht. Im Auslauf wird dann die Unwuchtmessung durchgeführt. Dabei laufen die beiden Bremsscheiben mit der Meßspindel um.

Zum Abbremsen wird der Haltestift mit einer der Eingriffstellen an der zweiten Bremsscheibe gesteuert in Eingriff gebracht. Diese Steuerung erfolgt gezielt in Abhängigkeit von der Position der dem Haltestift zunächst liegenden Eingriffstelle an der Bremsscheibe und der Drehzahl, die die mit der Meßspindel umlaufende zweite Bremsscheibe hat. Hierdurch wird erreicht, daß der Haltestift exakt mit der Eingriffstelle an der Bremsscheibe in Eingriff kommt.

In bevorzugter Weise sind die Eingriffstellen an der anzuhaltenden Bremsscheibe als radial abstehende Anschlagarme ausgebildet. Bei diesem Ausführungsbeispiel wird erreicht, daß der Anschlagstift exakt kurz vor der Anschlagkante am Haltearm in die Eingriffsposition gebracht wird, wofür eine kurzzeitig einwirkende Betätigungskraft auf den Haltestift ausreicht. Nachdem der Haltestift mit der Anschlagkante am Anschlagarm in Eingriff ist, wird durch das Drehmoment, das beim Abbremsen zur Wirkung kommt und das vom Haltestift als Gegenlager aufgenommen wird, der Haltestift selbsttätig in der Eingriffsposition gehalten. Für die Betätigung des Haltestiftes genügt daher eine nur kurzzeitige Energiezufuhr zur Betätigungseinrichtung, die bevorzugt einen als Hubmagnet wirkenden Elektromagneten zur Betätigung des Haltestiftes aufweist. Da nur ein geringer Energieaufwand erforderlich ist, kann der Elektromagnet auch batteriegespeist sein. Es ist daher nicht erforderlich, diesen ans Netz anzuschließen.

Die beiden Bremsscheiben können in bevorzugter Weise aus Kunststoff, insbesondere auf dem Markt erhältlichte Thermoplaste, bestehen, so daß sie eine gewisse Elastizität aufweisen und aufgrund ihrer Materialeigenschaft die erforderliche Bremswirkung herbeiführen. Aufgrund dieser Materialwahl wird ferner noch der Vorteil erzielt, daß keine Schlagwirkung auftritt, was bei harten Materialien der Fall ist.

Um eine ständige Aussage über die momentane Drehwinkelposition der Eingriffstellen bzw. der Anschlagarme an der zweiten Bremsscheibe zu haben, können in bekannter Weise Drehwinkelgeber und ein Bezugsmarkengeber vorgesehen sein. Diese können als Ingrementalgeber (Impulsgeber) ausgebildet sein. Um einen Bezugsimpuls für die Drehwinkelbestimmung zu haben, kann an der zweiten Bremsscheibe, die am Maschinenrahmen beim Bremsvorgang zu fixieren ist, eine Markierung, beispielsweise in Form eines Permanentmagneten, vorhanden sein. Dieser Pergamentmagnet kann abgetastet werden, und der gewonnene Impuls bzw. das gewonnene Signal ist das Bezugssignal für die Drehwinkelpositionierung. Aus diesem Bezugssignal kann dann auch die Position der übrigen Eingriffstellen rechnerisch ermittelt werden. Es ist natürlich auch möglich, daß jede Eingriffstelle mit einer Markierung bzw. mit einem Magneten versehen ist.

Die Abbremsvorrichtung kommt bevorzugt bei Auswuchtmaschinen zum Einsatz, mit denen Unwuchten an Kraftfahrzeugreifen gemessen werden.

Anhand der Figuren wird an einem Ausführungsbeispiel die Erfindung noch näher erläutert. Es zeigt:

Fig. 1    eine Abbremsvorrichtung, die ein Ausführungsbeispiel der Erfindung ist;

Fig. 2    ein Blockschaltbild einer Steuerschaltung für die Betätigungseinrichtung, welche bei dem in der Fig. 1 dargestellten Ausführungsbeispiel vorgesehen ist;

Fig. 3    eine schematische Darstellung zur Erläuterung des Steuerungsbetriebs der in Fig. 2 dargestellten Steuerschaltung.

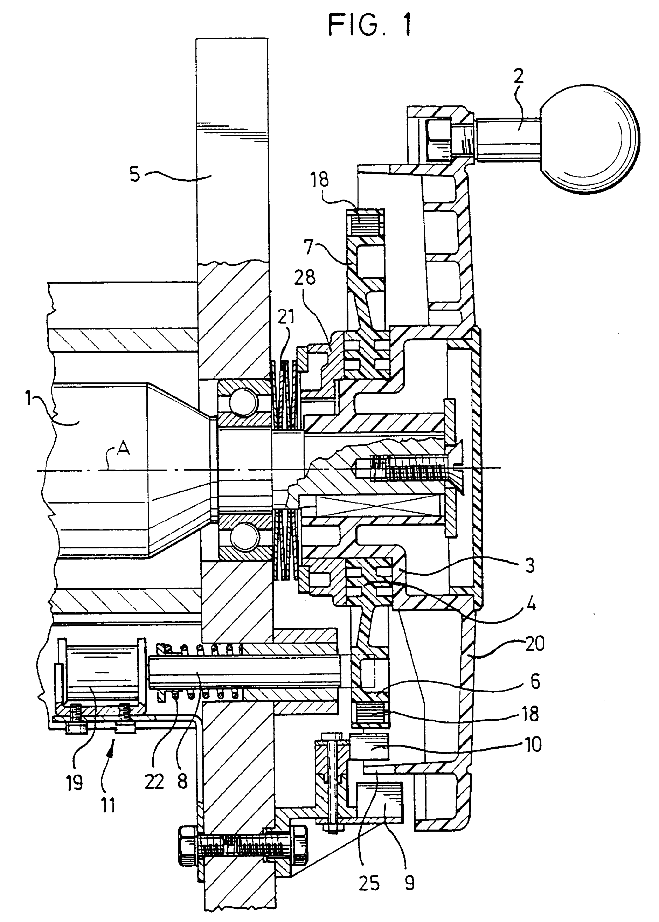

Das in der Fig. 1 dargestellte Ausführungsbeispiel einer Vorrichtung zum Abbremsen einer Meßspindel 1 in einer Auswuchtmaschine, insbesondere Kraftfahrzeugradauswuchtmaschine, besitzt als Antriebseinrichtung eine Handkurbel 2. Mit der Handkurbel 2 wird die Meßspindel 1 und der darauf aufgespannte in der Fig. nicht näher dargestellte Rotor, insbesondere das Kraftfahrzeugrad, auf Meßdrehzahl gebracht. Die Handkurbel wird dann losgelassen, und im Auslauf wird dann der Unwuchtmeßvorgang durchgeführt.

Die Handkurbel 2 ist an einer Kurbelscheibe 20 befestigt, an die einstückig eine erste Bremsscheibe 3 angeformt ist. Die Kurbelscheibe 20 und die erste Bremsscheibe 3 sind drehfest mit der Meßspindel 1 verbunden.

Ferner ist eine zweite Bremsscheibe 4 vorgesehen, die während des Hochlaufs und auch während des Auslaufs der Meßspindel 1, während welchem die Unwuchtmessung durchgeführt wird, mit der Kurbelscheibe 20 bzw. der ersten Bremsscheibe 3 und der Meßspindel 1 mitumläuft. Die zweite Bremsscheibe 4 wird durch Tellerfedern 21, welche an einem Gehäuserahmen 5 abgestützt sind, über ein ringförmiges Zwischenstück 28, an die erste Bremsscheibe 3 angedrückt. Durch die Tellerfedern 21 wird für den noch zu erläuternden Bremsvorgang auch die erforderliche Bremskraft geliefert.

Am Maschinenrahmen 5 ist parallel zur Achse A der Meßspindel 1 ein Haltestift 8 gelagert. Dieser Haltestift 8 ist parallel zur Achse A der Meßspindel 1 und damit senkrecht zur Drehrichtung der zweiten Bremsscheibe 4 und senkrecht zur Scheibenebene dieser Bremsscheibe 4 verschiebbar am Maschinenrahmen 5 gelagert. Für den Haltestift 8 ist eine Betätigungseinrichtung 11 vorgesehen. Diese weist einen als Hubmagneten wirkenden Elektromagneten 19 auf. Durch eine Feder 22 ist der Haltestift 8 in der Ruheposition am Maschinenrahmen 5, d.h. außer Eingriff mit der zweiten Bremsscheibe 4, gehalten. Durch kurzzeitiges Speisen des Elektromagneten 19 wird der Haltestift 8 in die in der Fig. 1 strichlierte Position entgegen der Kraft der Feder 22 gebracht. Diese Hubbewegung erfolgt, wie noch erläutert wird, in gesteuerter Art und Weise, so daß die Bremsscheibe 4 materialschonend in eine am Gehäuserahmen 5 fixierte Position gebracht wird.

Die zweite Bremsscheibe 4 besitzt Eingriffstellen für den Haltestift 8. Beim dargestellten Ausführungsbeispiel sind zwei Eingriffstellen 6 und 7 in Form von radial sich erstreckenden Anschlagarmen gezeigt. In bevorzugter Weise besitzt die zweite Bremsscheibe vier Anschlagarme als Eingriffstellen für den Haltestift 8.

Um eine Aussage über die jeweilige Drehwinkelposition der als Eingriffstellen 6 und 7 wirkenden Anschlagarme an der zweiten Bremsscheibe 4 zu haben, ist eine Inkrementalgebereinrichtung vorgesehen, welche Impulse abgibt, die eine Aussage über die jeweilige Drehwinkelpositionierung der Eingriffstellen an der zweiten Bremsscheibe 4 nach entsprechender Auswertung liefern. Hierzu sind am Maschinenrahmen 5 eine Abtasteinrichtung 9 vorgesehen, welche eine an der Kurbelscheibe 20 um den ganzen Umfang vorgesehene Zahnung 25 optisch abtastet.

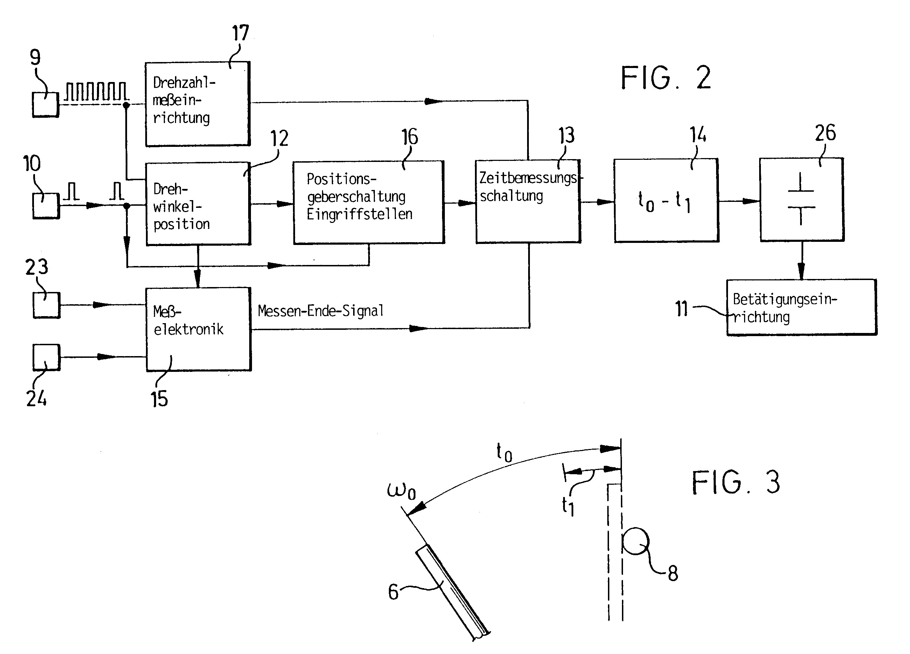

Die Abtasteinrichtung 9 liefert, wie in der Fig. 2 gezeigt ist, eine fortlaufende Impulskette, wobei jeder Impuls einen Drehwinkelschritt der Kurbelscheibe 20 und der sich mitdrehenden zweiten Bremsscheibe 4 angibt. Ferner ist eine zweite Abtasteinrichtung 10 vorgesehen, welche die an den Abtastarmen 6 und 7 angeordneten Permanentmagnete 18, welche Markierungsfunktion haben, abtastet. Die Abtasteinrichtung 10 liefert, wie in der Fig. 2 dargestellt ist, jeweils dann, wenn ein Permanentmagnet 18 vorbeiläuft, einen Impuls. Es ist nicht erforderlich, daß jeder Anschlagarm einen Permanentmagneten 18 als Markierung aufweist. Es genügt, wenn einer der Anschlagarme den markierenden Permanentmagneten 18 aufweist. Wenn die übrigen Anschlagarme, welche die Eingriffstellen für den Haltestift 8 bilden, gleiche Winkelabstände voneinander haben, läßt sich durch eine einfache Rechnerschaltung die jeweilige Position der anderen Haltestifte, welche nicht die Markierung 18 haben, ermitteln und dann bei der gesteuerten Betätigung des Haltestiftes 8 berücksichtigen.

Die Kurbelscheibe 20 und damit die angeformte erste Bremsscheibe 3 sowie die zweite Bremsscheibe 4 bestehen aus Kunststoff. Die Oberfläche dieser Bremsscheiben ist so ausgebildet, daß an den Berührungsflächen zwischen den beiden Bremsscheiben 3 und 4 in Zusammenwirkung mit den Tellerfedern 21, die die erforderliche Antriebskraft liefern, ein ausreichendes Bremsmoment zum Abbremsen der Spindel 1 mit dem daran befestigten Rotor, insbesondere Kraftfahrzeugrad, zu erreichen.

In der Fig. 2 ist die Auswerte- und Steuerschaltung dargestellt, durch welche eine gezielte Betätigung des Haltestiftes 8 zum Einleiten des Bremsvorgangs nach Beendigung der Unwuchtmessung im Auslauf erreicht wird. Die Schaltungsanordnung weist eine Drehzahlmeßeinrichtung 17 auf, die an die Abtasteinrichtung 9 angeschlossen ist. Die Drehzahlmeßeinrichtung 17 wertet die von der Abtasteinrichtung 9 gelieferten Impulse dahingehend aus, daß sie ein der Drehzahl der Spindel 1 und der beiden Bremsscheiben 3 und 4 proportionales Ausgangssignal liefert. An die Abtasteinrichtung 9 und an die Abtasteinrichtung 10 ist eine Drehwinkelpositionsschaltung 12 angeschlossen. Wie schon erläutert, liefert die Abtasteinrichtung 10 einen Impuls, der durch die Markierung 18 an der zweiten Bremsscheibe 4 hervorgerufen wird. Dieser Impuls kann als Bezugsimpuls für eine Drehwinkelpositionsmessung in Zusammenhang mit der von der Abtasteinrichtung 9 gelieferten Impulskette dienen. Ferner gibt dieser Impuls die jeweilige Lage des bzw. der Anschlagarme, welche die Eingriffstellen 6 und 7 an der zweiten Bremsscheibe 4 bilden, an. Die Drehwinkelpositionsschaltung liefert ein Ausgangssignal, das proportional der jeweiligen Drehwinkelstellung der Spindel 1 und der beidenBremsscheiben 3 und 4 ist. Das bedeutet, daß das Ausgangssignal der Drehwinkelpositionsschaltung 12 auch bei der Ermittlung der Unwuchtwinkellage in einer Meßelektronik 15, in welcher die von Meßwertgebern 23 und 24 gelieferten Meßsignale ausgewertet werden, verwendet wird. Die Meßwertgeber 23 und 24 sind in bekannter Weise ausgebildet und liefern Meßsignale, die den von der Meßspindel 1 ausgehenden Kräften bzw. Schwingungen proportional sind. Die Auswertung dieser Meßsignale erfolgt in der Meßelektronik 15 in bekannter Weise.

Das Ausgangssignal der Drehwinkelpositionsschaltung 12 wird ferner einer Drehwinkelpositionsgeberschaltung 16 zugeführt. Dieser Drehwinkelpositionsgeberschaltung 16 wird ferner das Ausgangssignal der Abtasteinrichtung 10 zugeführt. Die Drehwinkelpositionsgeberschaltung 16 wertet diese beiden zugeleiteten Signale in der Weise aus, daß sie die jeweilige Drehwinkelposition der Eingriffstellen, d.h. der Anschlagarme 6 und 7, an der zweiten Bremsscheibe 4 angibt. Ein dieser jeweiligen Drehwinkelposition der Eingriffstellen entsprechendes Ausgangssignal wird von der Drehwinkelpositionsgeberschaltung 16 geliefert.

An den Ausgang der Geberschaltung 16 ist eine Zeitbemessungsschaltung 13 angeschlossen. Die Zeitbemessungsschaltung 13 empfängt ferner von der Meßelektronik 15 ein Signal, das das Ende des Unwuchtmeßvorgangs angibt. Ferner empfängt die Zeitbemessungsschaltung 13 von der Drehzahlmeßeinrichtung 17 das der Drehzahl proportionale Signal. Da dieses Signal ständig geliefert wird, erhält die Zeitbemessungsschaltung 13 auch zu dem Zeitpunkt, an welchem die Unwuchtmessung beendet ist, Daten über die Momentandrehzahl der Spindel 1 und der beiden mitlaufenden Bremsscheiben 3 und 4. Die Zeitbemessungsschaltung 13 enthält eine Dividierschaltung, welche eine Division des Signals, das die Momentandrehzahl $D_o$ beim Ende der Unwuchtmessung angibt, mit dem Signal, das die momentane Winkelposition $\omega_o$ des in Drehrichtung gesehen dem Haltestift 8 nächstliegenden Anschlagarmes an der zweiten Bremsscheibe 4 angibt, durchführt. In der Fig. 3 ist dieser Anschlagarm mit 6 bezeichnet. Die Dividierschaltung in der Zeitbemessungsschaltung 13 führt mithin folgenden Rechenvorgang aus:

$$\omega_o \ / \ D_o \ = \ \omega_o \ / \ \omega_o \ / \ t_o \ = \ t_o.$$

$t_o$ bedeutet die Zeit, welche der Anschlagarm 6 benötigt, um mit der ermittelten Momentandrehzahl $D_o = \omega_o / t_o$ mit seiner vorderen Anschlagkante bis zur in Fig. 3 strichliert dargestellten Position, in welcher er am Haltestift 8 anliegt, bei Abgabe des Signals, das das Ende des Meßvorgangs angibt, zu gelangen. Da jedoch ein bestimmter Zeitraum $t_1$ erforderlich ist, um den Anschlagstift 8 aus seiner Ruheposition in die Eingriffposition (strichpunktierte Stellung in Fig. 1) zu bringen, ist eine Zeitdifferenzschaltung 14 vorgesehen, welche das Zeitinterval $t_1$ vom Zeitinterval $t_o$ subtrahiert. Das Zeitinterval $t_1$ ist die Zeit, welche benötigt wird, um den Haltestift 8 aus der Ruheposition in die in der Fig. 1 dargestellte strichlierte Eingriffsposition zu bringen. $t_1$ beinhaltet ferner eine geringfügige Vorgabezeit, durch welche gewährleistet ist, daß der Haltestift 8 mit Sicherheit in der Eingriffsposition sich befindet, bevor der Anschlagarm 6 diese Position (strichlierte Position in Fig. 3) erreicht.

Durch diese gezielte Steuerung der Betätigungseinrichtung 11, die den Haltestift 8 in die Eingriffsposition bringt, genügt es, auf den Haltestift 8 relativ kurzzeitig die Hubkraft zur Einwirkung zu bringen. Wenn der Anschlagarm 6 am Haltestift 8 anliegt, wird dieser durch das zur Wirkung kommende Bremsmoment, für welches dann der Haltestift 8 ein Gegenlager bildet, selbsttätig in der Eingriffsposition gehalten.

Da die Zeit, welche der Haltestift 8 benötigt, um von der Ruheposition in die Eingriffsposition zu kommen, bekannt ist, läßt sich das Zeitinterval $t_1$ einfach bestimmen und in einer Speichereinrichtung in der Zeitdifferenzschaltung 14 ablegen. Die Zeitdifferenzschaltung 14 führt dann die Differenzbildung $t_o - t_1$ durch und bestimmt damit den exakten Zeitpunkt, zu welchem beispielsweise durch Entladen eines Kondensators in einer Treiberstufe 26 der Elektromagnet 19 kurzzeitig gespeist wird und damit der Haltestift 8 in die Eingriffsposition gebracht wird.

In vorteilhafter Weise gewinnt man bei der Erfindung ferner eine drehrichtungsunabhängige Bremsung, so daß mit der durch Handkurbel betätigten Auswuchtmeßeinrichtung in beiden Drehrichtungen Meßläufe durchgeführt werden können.

## Patentansprüche

1. Vorrichtung an einer Auswuchtmaschine, zum Abbremsen der Meßspindel (1), die mit Hilfe einer Handkurbel (2) auf Meßdrehzahl bringbar ist, mit zwei Bremsscheiben (3,4), von denen die erste Bremsscheibe (3) drehfest mit der Meßspindel verbunden ist und die zweite Bremsscheibe (4) beim Bremsvorgang in einer gegen über dem Maschinenrahmen (5) stillstehenden Position fixiert ist, dadurch gekennzeichnet, daß zum Fixieren der zweiten während des Unwuchtmeßvorgangs in ungebremstem Zustand mit der Meßspindel (1) umlaufenden Bremsscheibe (4) in die stillstehende Position am Maschinenrahmen (5) an der zweiten Bremsscheibe eine oder mehrere Eingriffstellen (6, 7) für einen am Maschinenrahmen (5) senkrecht zur Drehrichtung der zweiten Bremsscheibe (4) verschiebbar gelagerter Haltestift (8) vorgesehen

4

ist bzw. sind und daß nach Beendigung des Unwuchtmeßvorgangs der Haltestift (8) in Abhängigkeit von der Drehwinkelposition und der Drehzahl der zweiten Bremsscheibe (4) gesteuert mit einer Eingriffstelle (6, 7) an der zweiten Bremsscheibe (4) durch eine Betätigungseinrichtung (11) als Gegenlager für die Erzeugung eines Bremsmoments in Eingriff bringbar ist.

2. Vorrichtung nach Anspruch 1, dadurch gekennzeichnet, daß an der zweiten Bremsscheibe (4) wenigstens eine den Eingriffstellen (6, 7) zugeordnete abtastbare Markirung (18) vorgesehen ist und daß eine die jeweilige Drehwinkelposition der zweiten Bremsscheibe überwachende Monitoreinrichtung (9, 10, 12,13,16) vorgesehen ist, welche in der Weise mit der Betätigungseinrichtung (11) verbunden ist, daß nach Beendigung der Unwuchtmessung die Betätigungseinrichtung (11) den Haltestift (8) gezielt mit einer der Eingriffstellen (6, 7) in Eingriff bringt.

3. Vorrichtung nach Anspruch 1 oder 2, dadurch gekennzeichnet, daß die Betätigungseinrichtung (11) auf den Haltestift (8) eine kurzzeitig einwirkende kraft ausübt und daß der Haltestift (8) selbsttätig mit der Eingriffstelle (6, 7) an der zweiten Bremsscheibe (4) in Eingriff gehalten ist.

4. Vorrichtung nach einem der Ansprüche 1 bis 3, dadurch gekennzeichnet, daß mehrere Eingriffstellen (6, 7) in gleichen Winkelabständen voneinander an der zweiten Bremsscheibe (4) vorgesehen sind.

5. Vorrichtung nach einem der Ansprüche 1 bis 4, dadurch gekennzeichnet, daß die Eingriffstellen (6, 7) als radial von der zweiten Bremsscheibe (4) abstehende Anschlagarme ausgebildet sind.

6. Vorrichtung nach einem der Ansprüche 1 bis 5, dadurch gekennzeichnet, daß die beiden Bremsscheiben (3, 4) aus Kunststoff bestehen.

7. Vorrichtung nach einem der Ansprüche 1 bis 6, dadurch gekennzeichnet, daß die Betätigungseinrichtung (11) zur Betätigung des Haltestiftes (8) von einer Drehzahlmeßeinrichtung (17), welche ein der Drehzahl der zweiten Bremsscheibe (4) proportionales Signal liefert, und einer Drehwinkelpositionsgebereinrichtung (16), welche ein der jeweiligen Drehwinkellage der Eingriffstellen (6, 7) an der zweiten Bremsscheibe (4) proportionales Signal liefert, nach Abgabe eines das Ende des Unwuchtmeßvorgangs anzeigenden Signals angesteuert ist.

8. Vorrichtung nach einem der Ansprüche 1 bis 7, dadurch gekennzeichnet, daß die Betätigungseinrichtung (11) einen Elektromagneten (19) aufweist.

9. Vorrichtung nach Anspruch 8, dadurch gekennzeichnet, daß der Elektromagnet (19) batteriegespeist ist.

10. Vorrichtung nach einem der Ansprüche 1 bis 9, dadurch gekennzeichnet, daß für die Bildung des drehzahlenproportionalen Signals als Ingrementalgeber und Bezugsignalgeber ausgebildete Abtasteinrichtungen (9, 10), welche die Drehung der Spindel (1) und der zweiten Bremsscheibe (4) abtasten, vorgesehen sind.

11. Vorrichtung nach Anspruch 10, dadurch gekennzeichnet, daß die Ausgangssignale der Abtasteinrichtungen (9, 10) auch für die Berechnung der Unwuchtwinkellage einer an Meßwertgeber (23, 24) angeschlossenen Meßelektronik (15) zugeführt sind.

## Claims

1. Apparatus on a balancing machine for retarding the measuring spindle (1) which can be brought up to a measuring speed of rotation by means of a hand crank (2), comprising two brake discs (3, 4) of which the first brake disc (3) is non-rotatably connected to the measuring spindle and the second brake disc (4) is fixed in the braking operation in a position which is stationary relative to the machine frame (5), characterised in that for the purposes of fixing the second brake disc (4) in the stationary position on the machine frame (5), which brake disc (4) rotates with the measuring spindle (1) during the unbalance measuring operation in an unbraked condition, provided on the second brake disc are one or more engagement locations (6, 7) for a holding pin (8) which is mounted on the machine frame (5) displaceably perpendicularly to the direction of rotation of the second brake disc (4), and that after termination of the unbalance measuring operation the holding pin (8), in dependence on the rotational angular position and the speed of rotation of the second brake disc (4), can be brought into engagement in a controlled fashion with an engagement location (6, 7) on the second brake disc (4) by an actuating means (11) as a support means, for producing a braking moment.

2. Apparatus according to claim 1 characterised in that provided on the second brake disc (4) is at least one marking (18) which can be sensed and which is associated with the engagement locations (6, 7), and that there is provided a monitoring means (9, 10, 12, 13, 16) which monitors the respective rotational angular position of the second brake disc and which is connected to the actuating means (11) in such a way that after termination of the unbalance measuring operation the actuating means (11) brings the holding pin (8) specifically into engagement with one of the engagement locations (6, 7).

3. Apparatus according to claim 1 or claim 2 characterised in that the actuating means (11) exerts on the holding pin (8) a force which acts briefly thereon and that the holding pin (8) is automatically held in engagement with the engagement location (6, 7) on the second brake disc (4).

4. Apparatus according to one of claims 1 to 3 characterised in that a plurality of engagement locations (6, 7) are provided at equal angular spacings from each other on the second brake disc (4).

5. Apparatus according to one of claims 1 to 4 characterised in that the engagement locations (6, 7) are in the form of abutment arms which project radially from the second brake disc (4).

6. Apparatus according to one of claims 1 to 5 characterised in that the two brake discs (3, 4) comprise plastics material.

7. Apparatus according to one of claims 1 to 6 characterised in that the actuating means (11) for actuation of the holding pin (8) is actuated, after the output of a signal indicating the end of the unbalance measuring operation, by a rotary speed measuring means (17) which supplies a signal that is proportional to the speed of rotation of the second brake disc (4), and a rotational angular position sensing means (16) which supplies a signal that is proportional to the respective rotational angular position of the engagement locations (6, 7) on the second brake disc (4).

8. Apparatus according to one of claims 1 to 7 characterised in that the actuating means (11) has a solenoid (19).

9. Apparatus according to claim 8 characterised in that the solenoid (19) is battery-powered.

10. Apparatus according to one of claims 1 to 9 characterised in that provided for forming the signal which is proportional to the speed of rotation are sensing means (9, 10) which are in the form of an incremental generator and a reference signal generator and which sense the rotary movement of the spindle (1) and the second brake disc (4).

11. Apparatus according to claim 10 characterised in that the output signals of the sensing means (9, 10) are also fed to an electronic measuring means (15) connected to measurement value generators (23, 24), for calculation of the angular position of the unbalance.

## Revendications

1. Dispositif monté sur une machine d'équilibrage pour le freinage de la broche de mesure (1), qui peut être amenée à une vitesse de rotation de mesure à l'aide d'une manivelle (2), comportant deux disques de frein (3,4), dont le premier disque de frein (3) est solidaire en rotation de la broche de mesure et dont le second (4) est immobilisé, lors de l'opération de freinage, en une position fixe par rapport au bâti (5) de la machine, caractérisé en ce qu'il est prévu, sur le second disque de frein, pour l'immobilisation du second disque de frein (4), qui, sans être freiné, tourne avec la broche de mesure (1) pendant l'opération de mesure du balourd, en la position fixe sur le bâti (5) de la machine, un ou plusieurs points d'attaque (6,7) d'une tige de retenue (8), qui est montée sur le bâti (5) de la machine de manière à coulisser perpendiculairement au sens de rotation du second disque de frein (4), et la tige de retenue (8), après que l'opération de mesure du balourd est achevée, peut, d'une manière commandée en fonction de la position angulaire de rotation et de la vitesse de rotation du second disque de frein (4), être amenée en tant que butée, pour la production d'un couple de freinage, par un dispositif d'actionnement (11), en prise avec un point d'attaque (6,7) situé sur le second disque de frein (4).

2. Dispositif suivant la revendication 1, caractérisé par le fait qu'au moins un repère (18) pouvant être exploré et qui est associé aux points d'attaque (6,7) est prévu sur le second disque de frein (4) et qu'il est prévu un dispositif de contrôle (9,10,12,13,16), qui contrôle la position angulaire en rotation du second disque de frein et est relié au dispositif d'actionnement (11) de telle sorte qu'à la fin de la mesure du balourd, le dispositif d'actionnement (11) amène bien la tige de retenue (8) en prise avec l'un des points d'attaque (6,7).

3. Dispositif suivant la revendication 1 ou 2, caractérisé par le fait que le dispositif d'actionnement (11) applique à la tige de retenue (8) une force qui agit pendant un bref intervalle de temps, et que la tige de retenue (8) est maintenue automatiquement en prise avec le point d'attaque (6,7) situé sur le second disque de frein (4).

4. Dispositif suivant l'une des revendications 1 à 3, caractérisé par le fait que plusieurs points d'attaque (6,7) sont prévus à des distances angulaires mutuelles identiques sur le second disque de frein (4).

5. Dispositif suivant l'une des revendications 1 à 5, caractérisé par le fait que les points d'attaque (6,7) sont réalisés sous la forme de bras de butée qui font saillie radialement du second disque de frein (4).

6. Dispositif suivant l'une des revendications 1 à 5, caractérisé par le fait que les deux disques de frein (3,4) sont en matière plastique.

7. Dispositif suivant l'une des revendications 1 à 6, caractérisé par le fait que le dispositif d'actionnement (11) est commandé pour l'actionnement de la tige de retenue (8), par un dispositif (17) de mesure de la vitesse de rotation, qui envoie un signal proportionnel à la vitesse de rotation du second disque de frein (4), et par un dispositif (16) donnant la position angulaire de rotation, qui envoie un signal proportionnel à la position angulaire respective en rotation des points d'attaque (6, 7) sur le second disque de frein (4), après émission d'un signal indiquant la fin de l'opération de mesure du balourd.

8. Dispositif suivant l'une des revendications 1 à 7, caractérisé par le fait que le dispositif d'actionnement (11) comporte un électroaimant (19).

9. Dispositif suivant la revendication 8, caractérisé par le fait que l'électroaimant (19) est alimenté par une batterie.

10. Dispositif suivant l'une des revendications 1 à 9, caractérisé par le fait que pour la formation du signal proportionnel à la vitesse de rotation, il est prévu des dispositifs d'exploration (9,10), qui sont agencés sous la forme d'un transmetteur incrémental et d'un générateur de signal de référence, qui explorent la rotation de la broche (1) et du second disque de frein (4).

11. Dispositif suivant la revendication 10, caractérisé par le fait que les signaux de sortie du dispositif d'exploration (9,10) sont également envoyés, pour le calcul de la position angulaire du balourd, à un système électronique de mesure (15) raccordé à des transmetteurs de valeurs de mesure (23,24).

# FIG. 1

## FIG. 2

## FIG. 3